# EUROPEAN PATENT APPLICATION

(11) **EP 3 185 208 A1**
(43) Date of publication of application: **28.06.2017**
(21) Application number: 16202332.9
(22) Date of filing: 06.12.2016
(51) Int. Cl.: G06T 5/00

(54) **METHOD FOR DETERMINING MISSING VALUES IN A DEPTH MAP, CORRESPONDING DEVICE, COMPUTER PROGRAM PRODUCT AND NON-TRANSITORY COMPUTER-READABLE CARRIER MEDIUM**

(30) Priority: 22.12.2015 EP 15307093
(71) Applicant: Thomson Licensing, 92130 Issy-les-Moulineaux (FR)
(72) Inventor: KERBIRIOU, PAUL, 35576 CESSON SEVIGNE CEDEX (FR); BURELLER, OLIVIER, 35576 CESSON SEVIGNE CEDEX (FR); BOISSON, GUILLAUME, 35576 CESSON SEVIGNE CEDEX (FR)
(74) Representative: Huchet, Anne

(57) **Abstract**

A method is proposed for determining missing values in a depth map corresponding to a pixel matrix representative of an image. The method comprises: scanning at least one column or row of said depth map; obtaining, for at least one pixel with an invalid depth value being scanned an information representative of the depth of first and second valid neighbor pixels; computing a transposed depth map, corresponding to the depth map of a transposed matrix of the pixel matrix; scanning at least one column or row of said transposed depth map including said invalid pixel; obtaining, for said invalid pixel an information representative of the depth of third and fourth valid neighbor pixels; determining, for said at least one invalid pixel, a depth value based on the information representative of the depth of said first, second, third and fourth valid neighbor pixels.

## Description

### 1. FIELD OF THE DISCLOSURE

The field of the disclosure is that of depth maps associated, for instance, with images. More specifically, the disclosure relates to a method for determining missing depth values, corresponding to "hole" pixels, in such depth map.

The disclosure can be applied notably to the field of 3D imaging, but can be of interest for any other field that requires the use of depth maps.

### 2. TECHNOLOGICAL BACKGROUND

A depth map is expected to contain information relating to the distance of the surfaces of scene objects from a viewpoint. For instance, a depth map associated with a given image is expected to contain information relating to the distance of the surfaces of scene objects from the viewpoint of the camera having provided the image.

In practice, two main groups of methods exist for determining depth maps. In a first group, there are methods based on a "time of flight" (TOF) measurement. Such methods use light pulses to illuminate the scene objects, and then evaluate the flight duration of those pulses in a radar-like approach. One main problem with this method comes from the complexity of the electronic apparatus that must be set up in order to estimate this time of flight. Moreover, the resulting depth map is often noisy. However, missing depth values are rare with such methods, depth values being found, even if corrupted with noise.

In a second group of methods, there are methods using a mathematical triangulation. In practice, two main methods can be found based on this principle:
- a disparity estimation method in which the depth map is derived from the comparison of two images of the same scene objects (e.g. the left and right views in a 3D rendering). However, with this method, missing depth values are also rare. Depth values are indeed always determined by the method, even if with an error relating, for instance, to a bias in a pixel used during the comparison between the two images;
- a method based on a mathematical triangulation relates to the use of a structured light for illuminating the scene objects. More precisely, the scene objects are illuminated with a structured image so that the distortion of the image is further analyzed for determining the depth map. A widely spread device using this method is the "Kinect" product, commercialized by Microsoft, that uses an infrared structured image to determine the depth of the scene objects. However, it appears that the use of such method leads to the presence of invalid depth area in the resulting depth map. There are two main reasons for that: on one hand, the presence of shadow areas when illuminating the scene objects, and on the other hand the fact that some surfaces absorb the infrared light used by this device. In both case, it is impossible for the device to determine any depth value for the corresponding area, thus leading to missing, or invalid, values in the delivered depth map. In practice, the Kinect device fills the map with a predefined default value meaning that the depth is invalid for the corresponding pixel. This is thus mainly when using this last category of method, based on the use of a structured light illumination, that the presence of missing depth values is faced.

The problem of estimating missing values in such depth maps has already been addressed. For instance, the method disclosed in the patent document US8,817,069B2 proposes to scan the lines of a depth map in a predefined direction. In order to determine a missing value of an invalid pixel, i.e. of a pixel with an invalid depth value, belonging to a scanned line, the method proposes to use depth values of valid pixels, i.e. of pixels with valid depth values, belonging to the same line being scanned.

However, such method, even if efficient in term of execution duration, may suffer from a lack of robustness when the missing depth values take the form of an area lying in the border of an image. In that case, valid pixels may not be found when scanning the lines of the depth map.

There is thus a need for a robust method for determining the depth value of an invalid pixel in a depth map, preserving the efficiency, in term of execution duration, of this robust method when implemented on a given hardware device.

### 3. SUMMARY

A particular aspect of the present disclosure relates to a method for determining missing values in a depth map corresponding to a pixel matrix representative of an image. The method comprises:
- scanning at least one column or row of said depth map, in increasing and/or decreasing order of the row or column indexes;
- obtaining, for at least one pixel with an invalid depth value being scanned in said at least one column or row of said depth map, noted invalid pixel, an information representative of the depth of first and second valid neighbor pixels corresponding to, when existing, pixels of determined depth values with a row or column index respectively lower and higher than, or equal to, a row or column index of said invalid pixel in said pixel matrix, according to the scanning order, or to a default pixel with a default depth value;
- computing a transposed depth map, corresponding to the depth map of a transposed matrix of the pixel matrix;
- scanning at least one column or row of said transposed depth map including said invalid pixel, in increasing and/or decreasing order of the row or column indexes;
- obtaining, for said invalid pixel being scanned in said at least one column or row of said transposed depth map, an information representative of the depth of third and fourth valid neighbor pixels corresponding to, when existing, pixels of determined depth values with a row or column index respectively lower and higher than, or equal to, a row or column index of said invalid pixel in said transposed pixel matrix, according to the scanning order, or to a default pixel with a default depth value;
- determining, for said at least one invalid pixel, a depth value based on the information representative of the depth of said first, second, third and fourth valid neighbor pixels.

Thus, this particular embodiment relies on a wholly novel and inventive solution for the determination of missing values in a depth map corresponding to a pixel matrix representative of an image.

For this, it is provided in one embodiment of the present principles that the determination of the depth value of an invalid pixel, i.e. of a pixel having an invalid depth value in an image, is based on the depth value of four neighbor pixels having valid depth values, i.e. of four valid neighbor pixels. Relying on four different depth values for the determination of the missing value provides robustness in respect of fluctuations for the determined value.

Moreover, those four neighbor pixels are chosen as part of the pixels having valid depth values when searching in the four cardinal directions starting from the location of the invalid pixel, i.e. when searching in the row and in the column in which stands the invalid pixel, and in one direction and in the other from it. Consequently, even for invalid pixels located near the borders of the image and for which no valid pixel may exist in one or two such cardinal directions away from them, valid neighbor pixels can still be found in at least one remaining cardinal direction.

In this embodiment of the present principles, it is proposed to perform the scanning of the depth map, for determining the valid neighbors, always in the same orientation, i.e. whether always in columns, or whether always in lines. In order to achieve a determination of the four valid neighbor pixels in the four cardinal directions (i.e. in both the column and the line in which stands the invalid pixel, and both in one direction and the other from it as described just above), it is proposed to perform a transposition of the depth map, i.e. an inversion of its column and rows, in between the determination of the two valid neighbor pixels in two first cardinal directions (e.g. in the column in which stands the invalid pixel and in both direction from it), and the determination of the two remaining valid neighbor pixels in the two other cardinal directions (e.g. in the row in which stands the invalid pixel and in both direction from it). Indeed, in practical implementations, the depth map, as well as the pixel matrix, are stored whether line by line, or whether column by column, in increasing memory addresses. Performing the scanning always in the same orientation, i.e. whether always scanning columns, or always scanning lines depending on the way the maps and matrices are stored, allows optimizing the number of required memory accesses and thus the execution duration of the disclosed method when implemented on practical computation machines comprising a plurality of processing elements.

According to a particular feature:
- said first and second valid neighbor pixels correspond respectively to, when existing, pixels of determined depth values, with the highest and lowest row or column index respectively lower and higher than, or equal to, a row or column index of said invalid pixel in said pixel matrix, according to the scanning order, or to a default pixel with a default depth value; and
- said third and fourth valid neighbor pixels corresponding respectively to, when existing, pixels of determined depth values with the lowest and highest row or column index respectively lower and higher than, or equal to, a row or column index of said invalid pixel in said transposed pixel matrix, according to the scanning order, or to a default pixel with a default depth value;

Thus, in this embodiment, the valid neighbor pixels are selected as the pixels having a valid depth value that are located the closest to the invalid pixel, while remaining in the same column or row. According to that, the depth value of those valid neighbor pixels is expected to be the closest to the missing depth value of the invalid pixel.

According to a particular feature, said information representative of the depth correspond to an element in the group:
- the row and column indexes of the valid neighbor pixels;
- the depth of the valid neighbor pixels.

Thus, in one embodiment of the present principles, the row and column indexes of the valid neighbor pixels are stored as a result of the scanning step. This allows an efficient implementation of the scanning in term of execution duration, as only the indexes used for comparisons are stored.

Alternatively, the depth of the valid neighbor pixels is directly stored during the scanning. Thus, even if it slows down this particular step, it allows a more efficient implementation of the determination of the missing depth values, as the depth of the valid neighbor pixels is directly available without additional indirect memory accesses. Moreover, for a valid pixel, its own value or a default value could be used, so that, at the step of determining the depth value for a valid pixel, the same operations are implemented as for an invalid pixel, thus allowing an efficient implementation of the method in term of execution duration.

According to a particular feature, the depth value of said at least one invalid pixel is determined as the maximum or minimum value of the depths of said first, second, third and fourth valid neighbor pixels.

Thus, a simple statistic is used to determine the missing depth values as a function of the depth of the valid neighbor pixels. This allows an efficient implementation of the determining step in term of execution duration.

Moreover, using the maximum value of the depths of the valid neighbor pixels can be of particular interest in situations where the undefined depth values result from the presence of shadow areas in a method of determination of the depth map based on the use of a structured light. In that case, it is most likely that the corresponding invalid pixels are in the background of the image, thus corresponding to high depth values relative to depth values of scene objects.

According to a particular feature, each of the scanning steps are performed simultaneously for a plurality of columns or rows.

Thus, in one embodiment of the present principles, the scanning of many columns (or rows depending on the way the maps and matrices are stored in the memory) are performed simultaneously, thus allowing an efficient implementation of the method in term of execution duration.

According to a particular feature, said method being implemented on a processor unit including a plurality of processing elements, each element of said plurality of processing elements implementing the scanning of a different column or row of said plurality of columns or rows during said simultaneous scanning, the scanning of a given column or row comprising operations applied successively to each pixel of said given column or row, and wherein the execution of said operations for each pixel by each element of said plurality of processing elements ends synchronously.

Thus, in this embodiment, the result of the operations performed by all the processors on the current pixel they are processing is available at the same time and corresponds to a portion of row or column of a valid neighbor pixels map that matches the selected format of the maps (and matrices) stored in the memory in increasing memory addresses.

This portion can thus be saved in memory in a minimum number of memory accesses (only driven by the memory bus width).

Another aspect of the present disclosure relates to a computer program product comprising program code instructions for implementing the above-mentioned method (in any of its different embodiments) when said program is executed on a computer or a processor.

Another aspect of the present disclosure relates to a non-transitory computer-readable carrier medium, storing a program which, when executed by a computer or a processor causes the computer or the processor to carry out the above-mentioned method (in any of its different embodiments).

Another aspect of the present disclosure relates to a device for determining missing values in a depth map corresponding to a pixel matrix representative of an image. The device comprising:
- means for scanning at least one column or row of said depth map, in increasing and/or decreasing order of the row or column indexes;
- means for obtaining, for at least one pixel with an invalid depth value being scanned in said at least one column or row of said depth map, noted invalid pixel, an information representative of the depth of first and second valid neighbor pixels corresponding to, when existing, pixels of well-defined depth values with a row or column index respectively lower and higher than, or equal to, a row or column index of said invalid pixel in said pixel matrix, according to the scanning order, or to a default pixel with a default depth value;
- means for computing a transposed depth map, corresponding to the depth map of a transposed matrix of the pixel matrix;
- means for scanning at least one column or row of said transposed depth map including said invalid pixel, in increasing and/or decreasing order of the row or column indexes;
- means for obtaining, for said invalid pixel being scanned in said at least one column or row of said transposed depth map, an information representative of the depth of third and fourth valid neighbor pixels corresponding to, when existing, pixels of well-defined depth values with a row or column index respectively lower and higher than, or equal to, a row or column index of said invalid pixel in said transposed pixel matrix, according to the scanning order, or to a default pixel with a default depth value;
- means for determining, for said at least one invalid pixel, a depth value based on the information representative of the depth of said first, second, third and fourth valid neighbor pixels.

According to a particular feature, the reprogrammable computing machine or the dedicated computing machine is of "Single Instruction, Multiple Data" type.

Thus, the method can be implemented in an optimized way in order to perform the scanning of a plurality of columns (or rows depending the way the depth map is stored in the memory, i.e. line-by-line or column-by-column) simultaneously.

According to a particular feature, the memory bus is of sixty-four bytes width and the reprogrammable computing machine or the dedicated computing machine comprises sixteen processing elements.

### 4. LIST OF FIGURES

Other features and advantages of embodiments shall appear from the following description, given by way of indicative and non-exhaustive examples and from the appended drawings, of which:
- Figure 1 is a flowchart of a particular embodiment of the disclosed method;
- Figures 2a and 2b provide a schematic illustration of the transposition operation of a depth map, or of a pixel image representative of an image;
- Figures 3a and 3b illustrate the valid neighbor pixels obtained according to a particular embodiment of the disclosed method;
- Figures 4a and 4b are schematic illustrations of the structural blocks that can be used for implementing the method according to particular embodiments of the disclosure;
- Figure 5 illustrates a portion of row of a depth map that is processed simultaneously by a plurality of processing elements according to a particular embodiment of the disclosed method.

### 5. DETAILED DESCRIPTION

In all of the figures of the present document, the same numerical reference signs designate similar elements and steps.

The general principle of the disclosed method consists in the determination of valid neighbor pixels, i.e. of pixels with valid depth values, taken in the neighborhood of an invalid pixel, i.e. of a pixel with an invalid depth value, in order to determine the depth value of the invalid pixel based on the depth value of the valid neighbor pixels. In the following, valid pixels are pixels with a depth value correctly defined by the device. In other words, the device ensures that these values are *well-defined.* Areas of the image for which the device is not able to ensure the well-definition of the depth value are called invalid pixels. A well-defined depth value is a depth value that has been determined by the device with a high level of confidence. A well-defined depth value is also called valid or determined or defined or present depth value.

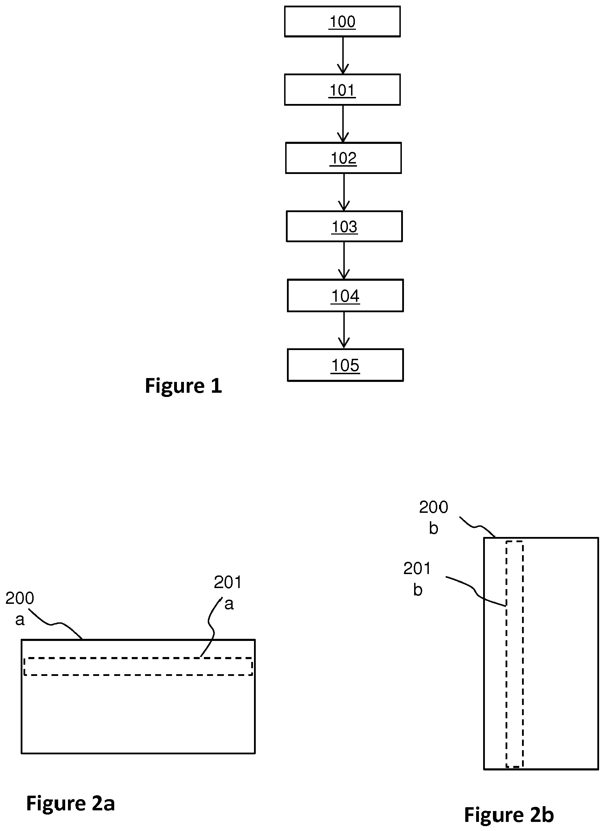

Referring now to **figure 1****,** we present a flowchart of a particular embodiment of the disclosed method.

In this embodiment, it is assumed that a depth map associated with a given pixel matrix representing an image, takes the form of a two-dimension matrix, composed of columns and rows of same dimensions as the associated pixel matrix. Consequently, the depth value of a given pixel has the same row and column indexes in the depth map than the pixel in the pixel matrix representing the image.

In step 100, a column of the depth map is scanned on a pixel-by-pixel basis. The scanning is first performed in one direction, i.e. starting from a first extremity of the column up to a second extremity of it, and then in the other direction, i.e. from the second extremity up to the first extremity. For instance, the column scanning is performed first in increasing order of the pixels row indexes, and then in decreasing order of the pixels row indexes. Alternatively, the scanning of the column is performed first in the decreasing order of the pixels row indexes, and then in the increasing order of it.

In another embodiment, this is a line of the depth map that is scanned instead of a column. The choice of line or column for the scanning can be determined by the way the image is stored in the memory of the device implementing the method of the present principles.

In step 101, for an invalid pixel present in the scanned column, named current invalid pixel, two valid neighbor pixels are obtained, named first and second valid neighbor pixels, when existing, or one or two default pixels otherwise.

In the present embodiment, the first valid neighbor pixel is obtained during the scanning of the column in increasing order of the pixels row indexes, and corresponds to the pixel of well-defined depth value with the highest row index lower than, or equal to, the row index of the current invalid pixel. If such a pixel of well-defined depth value doesn't exist, then the first valid neighbor is set to a default pixel.

More precisely, starting the scanning of the column from the pixel of lower row index, the depth of the pixels of increasing row indexes are tested successively, in order to find the valid pixel the closest to the invalid pixel.

Now, regarding the process for each of the pixels of the scanned column, either valid or invalid pixels, starting the scanning of the column from the pixel of lower row index:
- if the pixel of lower row index in the column has an invalid depth, i.e. is an invalid pixel, then the first valid neighbor of this pixel does not exist and is set to a default pixel;
- if the pixel of lower row index in the column has a valid depth, i.e. is a valid pixel, then the first valid neighbor of this pixel is set to itself;
- then the depth of the pixels of increasing row indexes are tested successively and the first valid neighbor of an invalid pixel in the column is taken as the pixel of well-defined depth value with the highest row index lower than, or equal to, the row index of the invalid pixel, and the first valid neighbor of a valid pixel is set to itself.

Thus, for a scanned column, as many first valid neighbors are obtained as pixels in the column.

Alternatively, when existing, the first valid neighbor is taken as the pixel of well-defined depth value with a row index just lower than the index of the pixel of well-defined depth value with the highest row index lower than, or equal to, the row index of the invalid pixel. This alternative can be chosen to avoid non-valuable valid neighbor in the border of a hole

It can be understood that any other valid pixel lying in the vicinity of the first valid pixel the closest to the invalid pixel as defined above can be considered as a valuable first valid neighbor for applying the disclosed method.

In the present embodiment, the second valid neighbor pixel is determined in the same way, but during the scanning of the column in decreasing order of the pixels row indexes, and corresponds to the pixel of well-defined depth value with the lowest row index higher than, or equal to, the row index of the current invalid pixel. If such a pixel of well-defined depth value doesn't exist, then the second valid neighbor is set to a default pixel.

More precisely, starting the scanning of the column from the pixel of higher row index, the depth of the pixels of decreasing row indexes are tested successively, in order to find the valid pixel the closest to the invalid pixel.

Now, regarding the process for each of the pixels of the scanned column, either valid or invalid pixels, starting the scanning of the column from the pixel of higher row index:
- if the pixel of higher row index in the column has an invalid depth, i.e. is an invalid pixel, then the second valid neighbor of this pixel does not exist and is set to a default pixel;
- if the pixel of higher row index in the column has a valid depth, i.e. is a valid pixel, the second valid neighbor of this pixel is set to itself;
- then the depth of the pixels of decreasing row indexes are tested successively and the second valid neighbor of an invalid pixel in the column is taken as the pixel of well-defined depth value with the lowest row index higher than, or equal to, the row index of the invalid pixel, and the second valid neighbor of a valid pixel is set to itself.

Thus, for a scanned column, as many second valid neighbors are obtained as pixels in the column.

The same alternatives as discussed for the first valid neighbor pixel exist for the second valid neighbor pixel and any other valid pixel laying in the vicinity of the second valid pixel the closest to the invalid pixel as defined just above can be considered as a valuable second valid neighbor for applying the disclosed method.

Alternatively, when the scanning of the column is performed first in the decreasing order of the pixels row indexes, and then in the increasing order of it, the definition of the first and second valid neighbor pixels are exchanged, i.e. the first valid neighbor pixel correspond to, when existing, a pixel of well-defined depth value with a row index higher than, or equal to, the row index of the invalid pixel whereas the second valid neighbor pixel correspond to, when existing, a pixel of well-defined depth value with a row index lower than, or equal to, the row index of the invalid pixel.

In the present embodiment, information representative of the depth of the first and second valid neighbors are then obtained for each invalid pixel present in the column that has been scanned. As already said, information representative of its own depth is obtained for each valid pixel present in the scanned column.

In another embodiment where this is a line of the depth map that is scanned instead of a column, the above definition of the first and second valid neighbor pixels stand when considering that the role of the column and the rows are exchanged. In that case, information representative of the depth of the first and second valid neighbors are obtained for each invalid pixel present in the row that has been scanned, and information representative of its own depth is obtained for each valid pixel present in the scanned row.

In another embodiment, the scanning step 100 and the obtaining step 101 are performed for a plurality of, preferably all, the columns (resp. rows depending on the embodiment) of the depth map, thus leading to two additional maps containing the information representative of the depth of the first and second valid neighbors obtained for all the invalid pixels present in the columns (resp. rows depending on the embodiment) that have been scanned, i.e. a first and a second valid neighbors depth information maps. As already said, first and second valid neighbors are also obtained for valid pixels, corresponding to themselves.

First and second valid neighbor can also be considered as top and bottom valid neighbor, for a pixel, when scanning a column in an increasing order.

The information representative of the depth of the first and second valid neighbors can be whether:
o the row and column indexes of the valid neighbor pixels, thus allowing recovering the depth of those valid neighbor pixels by recovering the corresponding information in the depth map;
o directly the depth of the valid neighbor pixels; or
o a default depth value in case no existing pixels could be found as valid neighbor pixels as discussed above.

In step 102, a transposed depth map, corresponding to the depth map of a transposed matrix of the pixel matrix is computed. This operation is further described below in relationship with the description of figures 2a and 2b, and allows obtaining third and fourth valid neighbors per pixel.

In step 103, a column of the transposed depth map is scanned on a pixel-by-pixel basis. In fact, exactly the same operations than the ones discussed above in step 100 are now applied to the transposed depth map.

In a step 104, third and fourth valid neighbor transposed pixels are obtained, based on the scanning of the column of the transposed depth map computed at step 103, by applying the same operations as the ones discussed above in relation with step 101. The row and column indexes of the third and fourth valid neighbor transposed pixels can then be exchanged so that to obtain third and fourth valid neighbor pixels with row and column indexes that match the organization of the original depth map.

An information representative of the depth of the third and fourth valid neighbor pixels are also obtained, this information being of same nature as the one obtained for the first and second valid neighbor pixels.

The same alternative embodiment as discussed in relation with step 100 and 101 apply with steps 103 and 104. In particular if rows are scanned in step 100 instead of columns, rows are also scanned instead of columns in step 103. In the same way, if the steps 103 and 104 are performed for all the columns (resp. all the rows depending on the embodiment) of the transposed depth map, two additional transposed maps are obtained, containing the information representative of the depth of the third and fourth valid neighbors obtained for all the invalid pixels present in the scanned columns (resp. all the rows depending on the embodiment) of the transposed depth map. As already said, third and fourth valid neighbors are also obtained for valid pixels, corresponding to themselves.

Those resulting maps may be transposed to obtain a third and a fourth valid neighbors depth information maps with elements having row and columns indexes corresponding to the indexes of the original depth map elements, and thus directly exploitable as the first and second valid neighbors depth information maps are.

These steps 103 and 104 thus allow obtaining valid neighbor situated on the horizontal direction, i.e. left and right valid neighbor, for a pixel, when scanning a column in an increasing order.

In a step 105, the missing depth values are determined based on the information representative of the depth of the first, second, third and fourth valid neighbor pixels.

In the present embodiment, the missing depth values are determined as the maximum value of the depth value of the first, second, third and fourth valid neighbor pixels.

In alternative embodiments, this is the minimum value of the depth value of the first, second, third and fourth valid neighbor pixels that can be considered, or any other statistic that can be considered based on those depth values (e.g. an interpolation of those depth values).

In other embodiments, the missing depth values are determined based only on the first, second, third and fourth valid neighbor pixels corresponding to existing pixels having a well-defined depth value. In other words, the default depth values that may be associated to neighbor pixels (i.e. neighbor pixels that are determined as default pixels) are not considered in this final step 105, thus allowing determining missing depth values based on more reliable information.

Alternatively, valid neighbor pixels may be considered in pairs. For instance, a first pair of valid neighbor pixels, composed of the first and second valid neighbor pixels determined during the first scanning step 100, is associated to a given invalid pixel. A second pair of valid neighbor pixels, composed of the third and fourth valid neighbor pixels determined during the second scanning step 104, is then associated to the same invalid pixel. For determining the missing depth value of the considered invalid pixel, only pairs composed of two valid neighbor pixels corresponding to existing pixels having a well-defined depth value (i.e. pairs that do not comprise default pixels, called "valid pair"), may be considered, thus reinforcing the reliability of the determined depth values.

For example, if only one valid pair exists, thus determining the missing depth value of the considered invalid pixel is based on the maximum depth value in this pair. If two valid pairs exist, thus determining the missing depth value of the considered invalid pixel is based on the maximum depth value of the four valid neighbor pixels. And if no valid pair exists, i.e. if four default values have been obtained during the first and second scannings, the missing depth value determined for the considered invalid pixel corresponds to the default value or its own invalid depth value.

Depending on the embodiment, the depth value of the first, second, third and fourth valid neighbor pixels of a given invalid pixel of given column and row indexes are:
- whether directly available as the data stored at the given column and row indexes in the first, second, third and fourth valid neighbors depth information maps;
- whether available in the depth map at the location corresponding to the first, second, third and fourth valid neighbors row and column indexes indicated in the depth information maps; or
- whether equal to a default value.

Referring now to figures 2a and 2b, we detail the transposition operation of a depth map, or of a pixel image representative of an image.

Those figures illustrate the transposition of a map or matrix 200a in a transposed map or transposed matrix 200b. In practice, a pixel having a column index i and a row *index k* in the map or matrix 200a becomes the pixel having a column *index k* and a row index i in the transposed map or transposed matrix 200b. According to that, a row 201a of pixels, stored in increasing columns indexes, in the map or matrix 200a becomes the column 201b of pixels, stored in increasing rows indexes, in the transposed map or transposed matrix 200b.

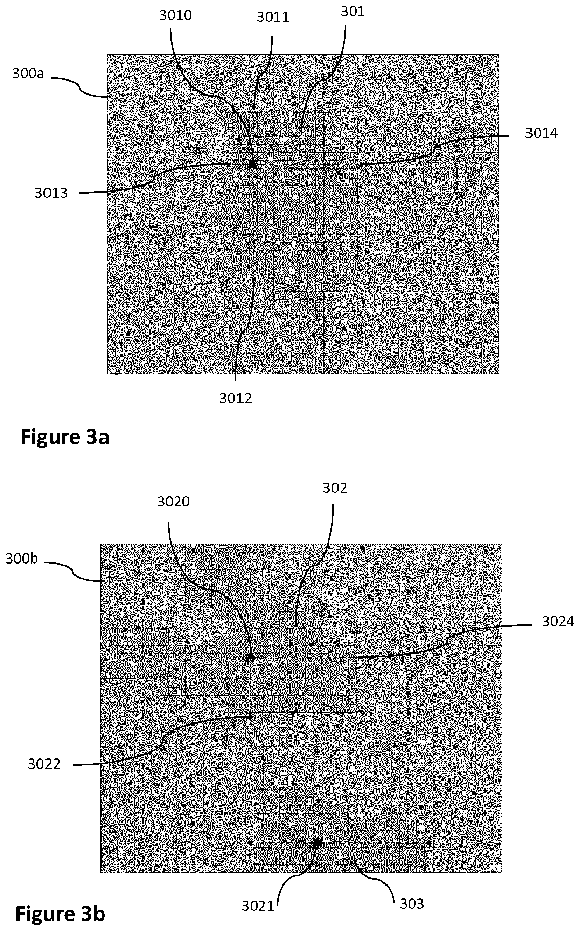

Referring now to **figures 3a and 3b****,** we illustrate the valid neighbor pixels obtained according to a particular embodiment of the disclosed method.

In the illustrative example shown in figure 3a, a group 301 of invalid pixels with missing depth values, considered as a "hole", is present in the middle of the depth map 300a. Considering an invalid pixel 3010 in the group 301, the application of one embodiment of the scanning step 100 and obtaining step 101 to all the columns of the depth map 300a results in the determination of:
- a first valid neighbor pixel 3011 (the "top" valid pixel) as the pixel of well-defined depth value with the highest row index lower than, or equal to, the row index of the invalid pixel; and
- a second valid neighbor pixel 3012 (the "bottom" valid pixel) as the pixel of well-defined depth value with the lowest row index higher than, or equal to, the row index of the invalid pixel.

In the same way, one embodiment of the scanning step 103 and obtaining step 104 is applied to all the columns of the transposed matrix of the depth map 300a. After transposition of the result, i.e. after exchange of the row and column indexes of the determined third and fourth valid neighbor transposed pixels, we get the determination of:
- the third valid neighbor pixel 3013 (the "left" valid pixel) as the pixel of well-defined depth value with the highest column index lower than, or equal to, the column index of the invalid pixel; and
- the fourth valid neighbor pixel 3014 (the "right" valid pixel) as the pixel of well-defined depth value with the lowest column index higher than, or equal to, the column index of the invalid pixel.

Thus, according to this example, a valid depth value can be set to the invalid pixel 3010, from the depth values of its first (3011), second (3012), third (3013) and fourth (3014) valid neighbors.

The different steps being applied to all the columns of the depth map 300a and all the columns of the transposed matrix of the depth map 300a, all the missing values of the depth map 300a can be determined.

Alternatively, in the illustrative example shown in figure 3b, the application of the method disclosed in relation with figure 1 to an invalid pixel 3020 present in a group 302 of invalid pixels present in the top left corner of the depth map 300b, leads to the determination of only two neighbors corresponding to existing pixels with valid depth values, i.e.:
- the second valid neighbor pixel 3022 ("bottom" valid pixel) as the pixel of well-defined depth value with the lowest row index higher than, or equal to, the row index of the invalid pixel.
- the fourth valid neighbor pixel 3024 ("right" valid pixel) as the pixel of well-defined depth value with the lowest column index higher than, or equal to, the column index of the invalid pixel.

Indeed, the first ("top" valid pixel) and third ("left" valid pixel) valid neighbor pixels are obtained as default pixels presenting a default depth value, as no valid pixel can be found with a row index lower than, or equal to, the row index of the invalid pixel 3020, and no valid pixel can be found with a column index lower than, or equal to, the row index of the invalid pixel 3020.

Regarding the invalid pixel 3021 present in a group 303 of invalid pixels, one can see that only three valid neighbor can be determined: "top", "left" and "right", the "bottom" valid neighbor being set to a default depth value.

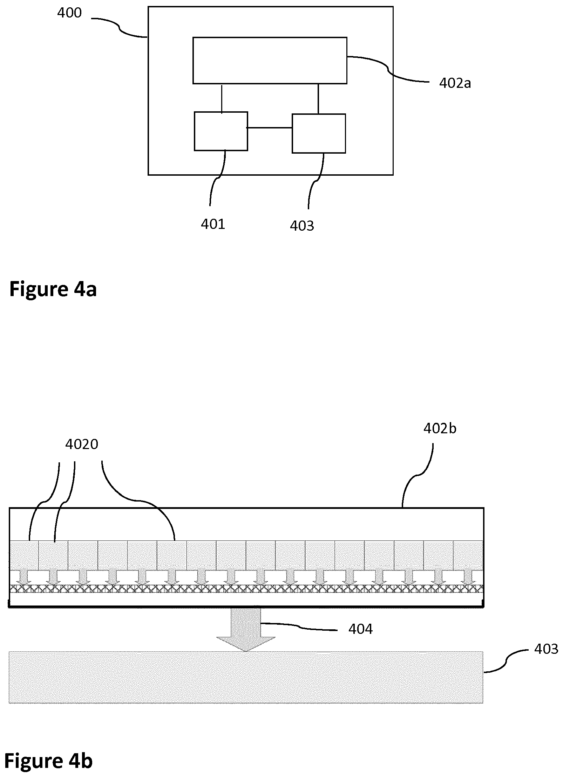

Referring now to figures 4a and 4b, we illustrate the structural blocks that can be used for implementing the method according to particular embodiments of the disclosure.

In an embodiment, a device 400 for implementing the disclosed method comprises a non-volatile memory 403 (e.g. a read-only memory (ROM) or a hard disk), a volatile memory 401 (e.g. a random access memory or RAM) and a processor 402a. The non-volatile memory 403 is a non-transitory computer-readable carrier medium. It stores executable program code instructions, which are executed by the processor 402a in order to enable implementation of the method described above (method for determining missing values in a depth map corresponding to a pixel matrix representative of an image) in its various embodiment disclosed in relationship with figures 1 to 3b.

Upon initialization, the aforementioned program code instructions are transferred from the non-volatile memory 403 to the volatile memory 401 so as to be executed by the processor 402a. The volatile memory 401 likewise includes registers for storing the variables and parameters required for this execution.

All the steps of the above determining missing values method may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In another embodiment, illustrated in figure 4b, the processor 402a is implemented as a processor unit 402b composed of a plurality of processing elements 4020. Each processing element is in charge of the scanning of one column (or row depending on the embodiment) so that a plurality of columns (or rows) can be scanned simultaneously.

The processor unit 402b accesses to the non-volatile memory 403 through a memory bus 404. The width of the memory bus 404 is adapted to allow transferring the data to be processed or processed by all the processing elements 4020 in a raw.

In one embodiment, the processor unit 402b is composed of sixteen processing elements 4020, and the width of the memory bus 404 is sixty-four bytes so that sixteen floating numbers, each one coded on four bytes, can pass through it simultaneously.

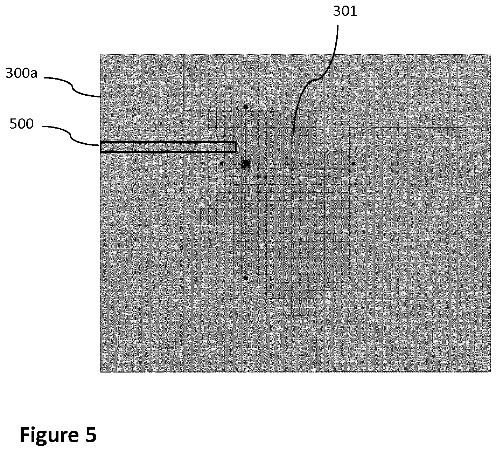

Referring now to **figure 5****,** we illustrate a portion of row of a depth map that is processed simultaneously by a plurality of processing elements during the scanning of the corresponding columns according to a particular embodiment of the disclosed method.

In this embodiment, the processor unit 402b implementing the disclosed method is composed of sixteen processing elements that perform the scanning, in steps 100, of sixteen columns of the depth map 300a simultaneously. The scanning is performed on a pixel-by-pixel basis so that at a given time, a row portion 500 composed of sixteen pixels is processed by the processor unit, each pixel of the row portion 500 being processed by a different processing element.

The method is implemented so that the operations performed by each processing element on each pixel during the scanning ends synchronously, i.e. the data resulting of the processing performed by each processing element (i.e. the information representing a valid depth value) is available at the same time for all the processing elements. In this embodiment, the depth map is stored in the non-volatile memory 403 on a line-by-line basis, the pixels of each line being stored in increasing memory addresses as their row indexes increase. Consequently, the sixteen results provided by the sixteen processing elements correspond to a memory block of sixteen consecutive elements that can be written as such in a single memory access through the memory bus 404. This correspondence between the data being processed simultaneously and their consecutive addresses for their memory storage minimize the number of memory accesses and thus the execution duration of the method.

This explain why, for determining the third and fourth valid neighbor pixels, that would correspond to a scanning of the depth map on a row-by-row basis, the disclosed method still performs the scanning on a column-by-column basis, but on a transposed depth map as described above in relation with figure 1. Consequently, the results provided by the different processing elements during the second scanning step 103 still correspond to a memory block of consecutive elements that can be written as such in a single memory access through the memory bus 404, thus preserving the execution duration benefit.

In an embodiment where the depth map is stored in the memory on a column-by-column basis, the disclosed method performs the scanning steps 100 and 103 on a row-by-row basis in order to achieve the same benefit in term of execution duration.

## Claims

1. Method for determining missing values in a depth map corresponding to a pixel matrix representative of an image,
said method being **characterized in that** it comprises:
• scanning (100) at least one column or row of said depth map, in increasing and/or decreasing order of the row or column indexes;
• obtaining (101), for at least one pixel with an invalid depth value being scanned in said at least one column or row of said depth map, noted invalid pixel, an information representative of the depth of first and second valid neighbor pixels corresponding to, when existing, pixels of determined_depth values with a row or column index respectively lower and higher than, or equal to, a row or column index of said invalid pixel in said pixel matrix, according to the scanning order, or to a default pixel with a default depth value;
• computing (102) a transposed depth map, corresponding to the depth map of a transposed matrix of the pixel matrix;
• scanning (103) at least one column or row of said transposed depth map including said invalid pixel, in increasing and/or decreasing order of the row or column indexes;
• obtaining (104), for said invalid pixel being scanned in said at least one column or row of said transposed depth map, an information representative of the depth of third and fourth valid neighbor pixels corresponding to, when existing, pixels of determined depth values with a row or column index respectively lower and higher than, or equal to, a row or column index of said invalid pixel in said transposed pixel matrix, according to the scanning order, or to a default pixel with a default depth value;
• determining (105), for said at least one invalid pixel, a depth value based on the information representative of the depth of said first, second, third and fourth valid neighbor pixels.

2. Method according to claim 1 wherein:
• said first and second valid neighbor pixels correspond respectively to, when existing, pixels of determined depth values, with the highest and lowest row or column index respectively lower and higher than, or equal to, a row or column index of said invalid pixel in said pixel matrix, according to the scanning order, or to a default pixel with a default depth value; and
• said third and fourth valid neighbor pixels corresponding respectively to, when existing, pixels of determined depth values with the lowest and highest row or column index respectively lower and higher than, or equal to, a row or column index of said invalid pixel in said transposed pixel matrix, according to the scanning order, or to a default pixel with a default depth value;

3. Method according to any of the claims 1 to 2 wherein said information representative of the depth correspond to an element in the group:
• the row and column indexes of the valid neighbor pixels;
• the depth of the valid neighbor pixels.

4. Method according to any of the claims 1 to 3 wherein the depth value of said at least one invalid pixel is determined as the maximum or minimum value of the depths of said first, second, third and fourth valid neighbor pixels.

5. Method according to any of the claims 1 to 4 wherein each of the scanning steps are performed simultaneously for a plurality of columns or rows.

6. Method according to claim 5, said method being implemented on a processor unit (402b) including a plurality of processing elements (4020), each element of said plurality of processing elements implementing the scanning of a different column or row of said plurality of columns or rows during said simultaneous scanning, the scanning of a given column or row comprising operations applied successively to each pixel of said given column or row, and wherein the execution of said operations for each pixel by each element of said plurality of processing elements ends synchronously.

7. Computer program product **characterized in that** it comprises program code instructions for implementing the method according to at least one of the claims 1 to 6, when said program is executed on a computer or a processor.

8. A non-transitory computer-readable carrier medium storing a computer program product according to claim 7.

9. A device (400) for determining missing values in a depth map corresponding to a pixel matrix representative of an image,
said device being **characterized in that** it comprises:
• means for scanning (402a, 402b) at least one column or row of said depth map, in increasing and/or decreasing order of the row or column indexes;
• means for obtaining (402a, 402b), for at least one pixel with an invalid depth value being scanned in said at least one column or row of said depth map, noted invalid pixel, an information representative of the depth of first and second valid neighbor pixels corresponding to, when existing, pixels of determined depth values with a row or column index respectively lower and higher than, or equal to, a row or column index of said invalid pixel in said pixel matrix, according to the scanning order, or to a default pixel with a default depth value;
• means for computing (402a, 402b) a transposed depth map, corresponding to the depth map of a transposed matrix of the pixel matrix;
• means for scanning (402a, 402b) at least one column or row of said transposed depth map including said invalid pixel, in increasing and/or decreasing order of the row or column indexes;
• means for obtaining (402a, 402b), for said invalid pixel being scanned in said at least one column or row of said transposed depth map, an information representative of the depth of third and fourth valid neighbor pixels corresponding to, when existing, pixels of determined depth values with a row or column index respectively lower and higher than, or equal to, a row or column index of said invalid pixel in said transposed pixel matrix, according to the scanning order, or to a default pixel with a default depth value;
• means for determining (402a, 402b), for said at least one invalid pixel, a depth value based on the information representative of the depth of said first, second, third and fourth valid neighbor pixels.

10. A device according to claim 9 wherein the reprogrammable computing machine or the dedicated computing machine is of "Single Instruction, Multiple Data" type.

11. A device according to any of the claims 9 or 10 comprising a memory bus (404) width of sixty-four bytes and wherein the reprogrammable computing machine or the dedicated computing machine comprises sixteen processing elements (4020).
